**Europäisches Patentamt**

**European Patent Office**

**Office européen des brevets**

(19)

(11) Veröffentlichungsnummer : **0 426 771 B1**

(12) **EUROPÄISCHE PATENTSCHRIFT**

(45) Veröffentlichungstag der Patentschrift :
**02.12.92 Patentblatt 92/49**

(51) Int. Cl.$^5$ : **B60T 8/32, B60K 28/16**

(21) Anmeldenummer : **90901807.9**

(22) Anmeldetag : **29.01.90**

(86) Internationale Anmeldenummer :
**PCT/EP90/00156**

(87) Internationale Veröffentlichungsnummer :
**WO 90/11214 04.10.90 Gazette 90/23**

(54) **VERFAHREN ZUR ERMITTLUNG DER GESCHWINDIGKEIT EINES FAHRZEUGS.**

(30) Priorität : **23.03.89 DE 3909589**

(43) Veröffentlichungstag der Anmeldung :
**15.05.91 Patentblatt 91/20**

(45) Bekanntmachung des Hinweises auf die
Patenterteilung :
**02.12.92 Patentblatt 92/49**

(84) Benannte Vertragsstaaten :
**DE FR GB IT SE**

(56) Entgegenhaltungen :
**EP-A- 219 023**
**WO-A-85/02592**
**DE-A- 3 435 866**
**DE-A- 3 603 765**
**FR-A- 2 077 335**

(73) Patentinhaber : **ROBERT BOSCH GMBH**
**Postfach 30 02 20**
**W-7000 Stuttgart 30 (DE)**

(72) Erfinder : **VOLKERT, Matthias**
**Friedrichstra e 20**
**W-7143 Vaihingen/Enz (DE)**
Erfinder : **MICHI, Harald**
**Weinbergstra e 6**
**W-7531 Ölbronn-D. 1 (DE)**
Erfinder : **CAO, Chi-Thuan**
**Tubizer Stra e 35**
**W-7015 Korntal-Münchingen 1 (DE)**
Erfinder : **ERBAN, Andreas**
**Berliner Stra e 24**
**W-7120 Bietigheim-Bissingen (DE)**
Erfinder : **SCHULZ, Alfred**
**Leinfelderweg 7**
**W-7141 Oberriexingen (DE)**

(74) Vertreter : **Kammer, Arno, Dipl.-Ing.**
**ROBERT BOSCH GmbH, Zentralabteilung**
**Patente, Postfach 30 02 20**
**W-7000 Stuttgart 30 (DE)**

EP 0 426 771 B1

## Beschreibung

### Stand der Technik

Es ist bekannt (DE-PS 25 58 712), unter Verwendung der Radgeschwindigkeiten eines gebremsten Fahrzeugs eine der Fahrzeuggeschwindigkeit angenäherte Bezugsgröße zu gewinnen und diese Bezugsgröße bei der Radschlupfermittlung zu verwenden. Es gibt dabei Phasen, während denen die Bezugsgröße mit vorgegebenen Steigungen über der Zeit verändert wird.

Auch bei der Antriebsschlupfregelung wird Schlupf gemessen und hierzu die Fahrzeuggeschwindigkeit benötigt. Deren Gewinnung ist bei Allradantrieb schwierig.

### Vorteile der Erfindung

Durch die erfindungsgemäßen Verfahren gemäß den Ansprüchen 1 und 2 kann die Fahrzeuggeschwindigkeit in einer besseren Annäherung als bekannt ermittelt werden, wobei zusätzlich die Bremsmomente oder Bremsdrücke bzw. die Antriebsmomente benötigt werden. Es gibt Fälle, bei denen Bremsdrucksensoren aus anderen Gründen (Verwendung des Bremsdrucks zur elektrischen Bremsdruckregelung (ELB) oder innerhalb des ABS) vorhanden sind. In diesen Fällen ist der Aufwand für die erfindungsgemäße Fahrzeuggeschwindigkeitsermittlung gering. Verbessert kann die Ermittlung noch durch eine Stützung der ermittelten Fahrzeuggeschwindigkeit werden. Im ABS-Fall kann man z.B. durch die größte oder zweitgrößte Radgeschwindigkeit stützen, im ASR-Fall durch die kleinste Radgeschwindigkeit.

Der Lehre des Anspruchs 1 liegen folgende Überlegungen zugrunde:

Ausgangspunkt ist die Differentialgleichung des Fahrzeugs. Wirken lediglich Bremskräfte, so lautet diese

$$m\dot{v}_F = - \sum_{i=1}^{4} \mu_i F_{zi} \quad , \tag{1}$$

wobei mit m die Fahrzeugmasse, mit $\dot{v}_F$ die Fahrzeugbeschleunigung, mit $\mu_i$ die Reibbeiwerte an den vier Rädern und mit $F_{zi}$ die entsprechenden Radaufstandskräfte (i = 1...4) bezeichnet sind.

Die Differentialgleichungen der einzelnen Räder lauten mit den Radträgheitsmomenten $\theta_{Ri}$, den Radradien r, den Radbeschleunigungen $\dot{v}_{Ri}$, den Bremsdrücken $P_i$ und den Proportionalitätsfaktoren zwischen Bremsdruck und Bremsmoment $c_{pi}$:

$$\frac{\theta_{Ri}}{r}\dot{v}_{Ri} = \mu_i F_{zi} r \cdot c_{pi} p_i \, , \, i = 1...4 \, . \tag{2}$$

Werden diese Gleichungen nach den Bremskräften $\mu_i \cdot Fz_i$ aufgelöst und in (1) eingesetzt, so ergibt sich für die Fahrzeugbeschleunigung

$$\dot{v}_F = - \frac{1}{mr^2} \sum_{i=1}^{4} \theta_{Ri} \dot{v}_{Ri} - \frac{1}{mr} \sum_{i=1}^{4} c_{pi} p_i \tag{3}$$

Eine Integration dieser Gleichung führt auf die gesuchte Fahrzeuggeschwindigkeit. Bei einer Betrachtung zu diskreten Zeitpunkten (Zeitabstand T) ergibt sich die Fahrzeuggeschwindigkeit zum Zeitpunkt k aus Radgeschwindigkeits- bzw. Druckmeßwerten zu den Zeitpunkten k und (k-1) gemäß der Beziehung:

$$v_F(k) = v_F(k-1) + \frac{1}{mr^2} \sum_{i=1}^{4} \theta_{Ri} (v_{Ri}(k-1) - v_{Ri}(K)) - \frac{T}{mr} \sum_{i=1}^{4} c_{pi} p_i(k) \tag{4}$$

Anstelle der Bremsdrücke $p_i$ können auch die Bremsmomente $M_{Bi}$ der Räder direkt gemessen und verwendet werden. Es entfällt dann die Bestimmung der Proportionalitätsfaktoren $c_{pi}$.

Selbstverständlich können neben den eigentlichen Bremskräften auch alle weiteren am Fahrzeug angreifenden Kräfte berücksichtigt werden, sofern sie meßbar sind oder sich von bekannten. Größen (einschließlich $v_F$) ableiten lassen. In diesem Fall ist die rechte Seite von Gleichung (1) um diese Kräfte zu ergänzen, die dann analog zu den Bremskräften integriert werden.

Wird die so gewonnene Fahrzeuggeschwindigkeit, wie auch bisher üblich, mit Hilfe der größten Radge-

2

schwindigkeit gestützt, so läßt sich eine sehr hohe Genauigkeit erzielen.

Der oben für gebremste Fahrzeuge dargestellte Sachverhalt kann auch auf ASR-Systeme angewandt werden. In diesem Fall müssen die Bremsmomente $c_{pi}p_i$ durch die Antriebsmomente $M_{Ai}$ ersetzt und die Gleichungen (1) bis (4) folgendermaßen umgestellt werden:

$$m\dot{v}_F = \sum_{i=1}^{4} \mu_i F_{zi} \qquad (1')$$

$$\frac{\theta R_i}{r}\dot{v}_{Ri} = -\mu_i F_{zi}r + M_{Ai}, \; i = 1...4 \qquad (2')$$

$$\dot{v}_F = -\frac{1}{mr^2}\sum_{i=1}^{4}\theta_{Ri}\dot{v}_{Ri} + \frac{1}{mr}\sum_{i=1}^{4}M_{Ai} \qquad (3')$$

$$v_F(k) = v_F(k-1) - \frac{1}{mr^2}\sum_{i=1}^{4}\theta_{Ri}(v_{Ri}(k-1) - v_{Ri}(k)) + \frac{T}{mr}\sum_{i=1}^{4}M_{Ai}(k) \qquad (4')$$

Figurenbeschreibung

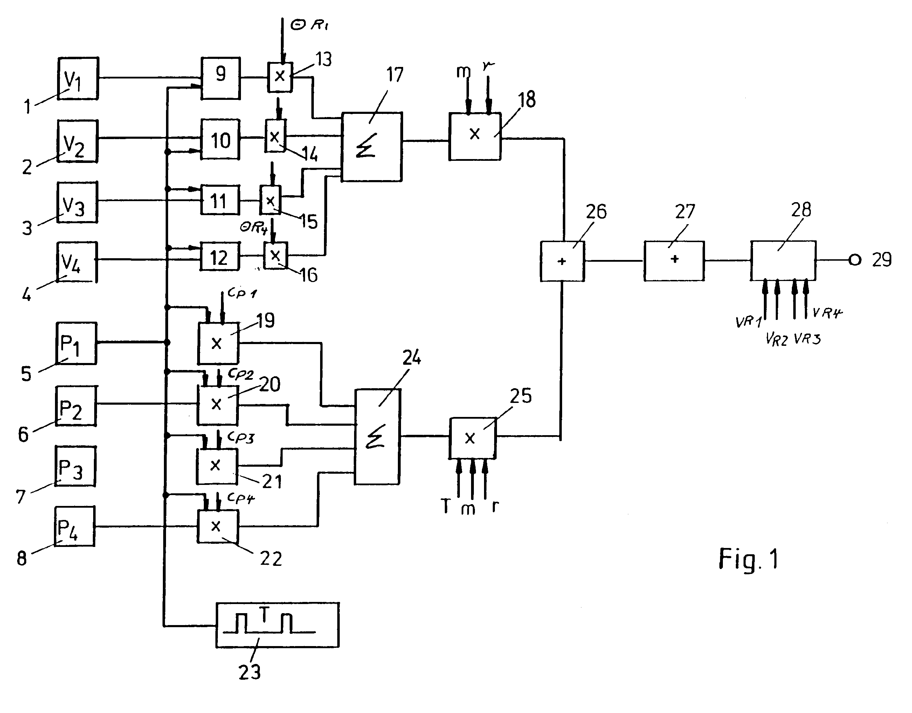

Anhand der Zeichnung wird ein Ausführungsbeispiel der Erfindung erläutert. Dort sind mit 1 bis 4 Radgeschwindigkeitssensoren und mit 5 bis 8 Drucksensoren für die Räder i = 1...4 eines Fahrzeugs bezeichnet. In den Gliedern 9 bis 12 sind die Meßwerte $v_{Ri}(k-1)$ der vorhergehenden Messung zum Zeitpunkt (k-1) gespeichert.

Zum Zeitpunkt K werden die Glieder 9-12 von einem Taktgeber 23 angesteuert. Sie übernehmen nun die neuen Meßwerte $v_{Ri}(k)$, bilden die Differenzen $(v_{Ri}(k-1) - v_{Ri}(k))$ und speichern die neuen Meßwerte $v_{Ri}(k)$ ein. Die Differenzen $(v_{Ri}(k-1)-v_{Ri}(k))$ werden dann Multiplizierstufen 13 bis 16 zugeführt, die die Differenzen mit den Radträgheitsmomenten $\theta_{Ri}$ multiplizieren. Danach werden die Ausgangssignale der Multiplizierstufen 13 bis 16 in einem Addierer 17 addiert. Die erhaltene Summe wird in einer anschließenden Multiplizierstufe mit dem Faktor $1/mr^2$ multipliziert.

Zum Zeitpunkt K übernehmen Multiplizierstufen 19 bis 22 gesteuert vom Taktgeber 23 die Meßwerte $p_i$ für den Bremsdruck und multiplizieren diese Werte mit den Konstanten $c_{pi}$. Danach wird im Addierer 24 die Summe der vier Ausgangssignale der Multiplizierstufen 19 bis 22 gebildet und diese Summe wird danach mit dem Faktor T/mr in einer Multiplizierstufe 25 multipliziert. Die in einem Addierer 26 gebildete Summe der Ausgangssignale der Multiplikationsstufen 18 und 25 ist der Korrekturwert $K_o$, um den die zuvor (Zeitpunkt (k-1)) gemessene Fahrzeuggeschwindigkeit $v_F(k-1)$ korrigiert werden muß. Der Wert $v_F(k-1)$ ist im Glied 27 gespeichert. Das Glied 27 korrigiert den Wert $v_F(k-1)$ um den Korrekturwert $K_o$ und speichert den neuen Fahrzeuggeschwindigkeitswert $v_F(k) = v_F(k-1) + K_o$ ab. In einer Stufe 28 wird der ermittelte Fahrzeuggeschwindigkeitswert $v_F(k)$ noch durch die Radgeschwindigkeitswerte $v_{Ri}$ gestützt; d.h. z.B., daß der ermittelte Wert $v_F(k)$ auf die größte Radgeschwindigkeit wenigstens teilweise hochgezogen wird, wenn wenigstens eine der Radgeschwindigkeiten größer als $v_F(k)$ ist. An der Klemme 29 steht dann das ermittelte Fahrzeuggeschwindigkeitssignal zur Verfügung. Das in der Zeichnung in Hardwaretechnik ausgeführte Ausführungsbeispiel kann auch mittels eines Rechners und einer entsprechend gestalteten Software realisiert werden. Für den Antriebsschlupffall ergibt sich ein äquivalentes Blockschaltbild.

**Patentansprüche**

1. Verfahren zur Ermittlung der Geschwindigkeit eines gebremsten Fahrzeugs, unter Verwendung der gemessenen Geschwindigkeiten $v_{Ri}$ der Fahrzeugräder i, dadurch gekennzeichnet, daß zusätzlich die Drücke $p_i$ oder Bremsmomente $M_{Bi}$ an den Bremsen der Räder gemessen werden und daß die Fahrzeuggeschwindigkeit zum Zeitpunkt k aus der zum Zeitpunkt (k-1) ermittelten Fahrzeuggeschwindigkeit und einem Korrekturfaktor, der die Summe der zu den Zeitpunkten (k-1) und k gemessenen Radgeschwindigkeitsdifferenzen ($v_{Ri}(k-1) - v_{Ri}(k)$) an den vier Rädern und die Summe der für den Zeitpunkt K ermittelten Bremsmomente $M_{Bi}(k) = c_{pi} \cdot p_i(k)$ an den Rädern beinhaltet nach Maßgabe der Beziehung

$$v_F(k) = v_F(k-1) + \frac{1}{mr^2}\sum_{i=1}^{4} \theta_{Ri}\,(v_{Ri}(k-1) - v_{Ri}(k)) - \frac{T}{mr}\sum_{i=1}^{4} c_{pi}p_i(k)$$

ermittelt wird, wobei m die Fahzeugmasse, r der Reifenradius, $\theta R_i$ das Trägheitsmoment eines Rades, $c_{pi}$ der Proportionalitätsfaktor und T die Zeit ist, um den die Zeitpunkte (k-1) und K auseinanderliegen.

2. Verfahren zur Ermittlung der Geschwindigkeit eines angetriebenen Fahrzeugs, unter Verwendung der gemessenen Geschwindigkeiten $v_{Ri}$ der Fahrzeugräder i, dadurch gekennzeichnet, daß zusätzlich das Antriebsmoment $M_{Ai}$ an den Rädern gemessen werden und daß die Fahrzeuggeschwindigkeit zum Zeitpunkt K aus der zum Zeitpunkt (k-1) ermittelten Fahrzeuggeschwindigkeit und einem Korrekturfaktor, der die Summe der zu den Zeitpunkten (k-1) und k gemessenen Radgeschwindigkeitsdifferenzen ($v_{Ri}(k-1) - v_{Ri}(k)$) an den vier Rädern und die Summe der für den Zeitpunkt k ermittelten Antriebsmomente $M_{Ai}$ an den vier Rädern beinhaltet nach Maßgabe der Beziehung

$$v_F(k) = v_F(k-1) - \frac{1}{mr^2}\sum_{i=1}^{4} \theta_{Ri}\,(v_{Ri}(k-1) - v_{Ri}(k)) + \frac{T}{mr}\sum_{i=1}^{4} M_{Ai}(k)$$

ermittelt wird, wobei m die Fahrzeugmasse, r der Reifenradius, $\theta_{Ri}$ das Trägheitsmoment eines Rades und T die Zeit ist, um den die Zeitpunkte (k-1) und K auseinanderliegen.

3. Verfahren nach Anspruch 1 oder 2, dadurch gekennzeichnet, daß die ermittelte Fahrzeuggeschwindigkeit $v_F(k)$ durch die gemessene Radgeschwindigkeit (im Bremsfall die größte im Antriebsschlupffall die kleinste Radgeschwindigkeit) gestützt wird.

## Claims

1. A procedure for finding the speed of a braked vehicle, using measured speeds $V_{Ri}$ at the wheels i, characterized by the fact that pressures $p_i$ or braking moments $M_{Bi}$ at the brakes on the wheels are also measured and that the speed of the vehicle at time k is found from the speed of the vehicle at time (k-1) and a correction factor which incorporates the sum of the differences in wheel speeds ($V_{Ri}(k-1) - V_{Ri}(k)$) at the four wheels measured at times (k-1) and k and the sum of the braking moments $M_{Bi}(k) = c_{pi} \cdot p_i(k)$ at the four wheels based on the correlation

$$V_F(k) = V_F(k-1) + \frac{1}{mr^2}\sum_{i=1}^{4} \theta_{Ri}(V_{Ri}(k-1) - V_{Ri}(k)) - \frac{T}{mr}\sum_{i=1}^{4} C_i P_i(k)$$

in which m denotes vehicle mass; r tyre radius; $\theta R_i$, the moment of inertia for a wheel, $c_{pi}$ the proportionality factor, and in which T denotes the interval between times (k-1) and K.

2. A procedure for determining the speed of a powered vehicle, using measured speeds $v_{Ri}$ at the wheels i, characterized by the fact that the drive torque $M_{Ai}$ is also measured at the wheels and that the speed of the vehicle at time K is found from the speed of the vehicle at time (k-1) and a correction factor which incorporates the sum of the differences in wheel speeds ($v_{Ri}(k-1) - v_{Ri}(k)$) at the four wheels as measured at times (k-1) and K and the sum of the values for the drive torque $M_{Ai}$ at the four wheels, based on the correlation

$$V_F(k) = V_F(k-1) + \frac{1}{mr^2}\sum_{i=1}^{4} \theta_{Ri}(V_{Ri}(k-1) - V\_Ri(k)) + \frac{T}{mr}\sum_{i=1}^{4} M_{Ai}(k)$$

in which m denotes vehicle mass; r tyre radius; $\theta R_i$ the moment of inertia for a wheel and in which T denotes the interval between times (k-1) and K.

3. A procedure, as for claim 1 or claim 2, characterized by the fact that the vehicle speed $v_F(k)$ which is found backed up by the greatest (in the case of braking) or the lowest (in the case of slippage in the drive) measured speed of the wheel.

**Revendications**

1. Procédé pour la détermination de la vitesse d'un véhicule freiné en utilisant les vitesses mesurée $v_{Ri}$ des roues i du véhicule, caractérisé en ce qu'en plus, on mesure les pressions $p_i$ ou les couples de freinage $M_{Bi}$ sur les freins des roues et la vitesse du véhicule à l'instant k est exprimée à partir de la vitesse du véhicule déterminée à l'instant k-1 et d'un coefficient de correction qui représente la somme des différences de vitesses de roues mesurées aux instants k-1 et k, c'est-à-dire $(v_{Ri}(k-1) - v_{Ri}(k)$ au niveau des quatre roues et la somme des couples de freinage $M_{bi}(k) = c_{pi} \cdot pi\,(k)$ au niveau des quatre roues, $c_{pi}$ étant le coefficient de proportionnalité, couple de freinage mesurée à l'instant K et on détermine la relation :

$$v_F(k) = v_F(k-1) + \frac{1}{mr^2} \sum_{i=1}^{4} \theta_{Ri} (v_{Ri}(k-1) - v_{Ri}(k))$$

$$\longrightarrow \quad - \frac{T}{mr} \sum_{i=1}^{4} c_{pi} p_i(k)$$

Dans laquelle m est la masse du véhicule, r le rayon des roues, $\theta_{Ri}$ le moment d'inertie d'une roue, $c_{pi}$ le coefficient de proportionnalité et T le temps séparant les instants k-1 et k.

2. Procédé pour la détermination de la vitesse d'un véhicule entraîné en utilisant les vitesses mesurées $v_{Ri}$ des roues i du véhicule, procédé caractérisé en ce qu'en plus on mesure le couple d'entraînement $M_{Ai}$ sur les roues et la vitesse du véhicule à l'instant K s'écrit à partir de la vitesse du véhicule déterminée à l'instant k-1 et d'un coefficient de correction qui représente la somme des différences de vitesses de roues $(v_{Ri}(k-1) - v_{Ri}(k))$ de toutes les quatre roues mesurée aux instants k-1 et k et la somme des couples moteurs $M_{Ai}$ des quatre roues, déterminée aux instants k, selon la relation :

$$v_F(k) = v_F(k-1) - \frac{1}{mr^2} \sum_{i=1}^{4} \theta_{Ri} (v_{Ri}(k-1) - v_{Ri}(k))$$

$$\longrightarrow \quad + \frac{T}{mr} \sum_{i=1}^{4} M_{Ai}(k)$$

dans laquelle m représente la masse du véhicule, r le rayon des roues, $\theta_{Ri}$ le couple d'inertie d'une roue, et T le temps séparant les instants k-1 et k.

3. Procédé selon la revendication 1 ou 2, caractérisé en ce qu'on base la vitesse déterminée du véhicule $v_F(k)$ sur la vitesse de roue mesurée (dans le cas du freinage, il s'agit de la plus grande vitesse et dans le cas d'un système anti-patinage, il s'agit de la plus petite vitesse de roue).

Fig. 1

EP 0 426 771 B1